# EUROPEAN PATENT SPECIFICATION

(11) **EP 2 863 673 B1**
(45) Date of publication and mention of the grant of the patent: **08.08.2018**
(21) Application number: 13804808.7
(22) Date of filing: 14.06.2013
(51) Int. Cl.: H04W 72/08, H04W 72/02, H04W 88/06

(54) **RADIO TERMINAL, BASE STATION APPARATUS, RADIO COMMUNICATION SYSTEM, AND COMPUTER PROGRAM**
FUNKENDGERÄT, BASISSTATIONSVORRICHTUNG, FUNKKOMMUNIKATIONSSYSTEM UND COMPUTERPROGRAMM
TERMINAL RADIO, APPAREIL DE STATION DE BASE, SYSTÈME DE COMMUNICATION RADIO ET PROGRAMME INFORMATIQUE

(30) Priority: 14.06.2012 JP 2012134935
(43) Date of publication of application: 22.04.2015
(73) Proprietor: KDDI Corporation, Tokyo 163-8003 (JP)
(72) Inventor: HATAKAWA Yasuyuki, Fujimino-shi Saitama 356-8502 (JP); KITAGAWA Koichiro, Fujimino-shi Saitama 356-8502 (JP); MATSUMOTO Tomoko, Fujimino-shi Saitama 356-8502 (JP); KONISHI Satoshi, Fujimino-shi Saitama 356-8502 (JP)
(74) Representative: Treeby, Philip David William
(86) International application number: PCT/JP2013/066474
(87) International publication number: WO 2013/187504

(56) References cited:
- EP-A2- 2 012 443
- WO-A2-2010/078271
- JP-A- 2005 223 722
- JP-A- 2009 017 560

## Description

### TECHNICAL FIELD

The present invention relates to a radio terminal, a base station apparatus, a radio communication system, and a computer program.

### BACKGROUND ART

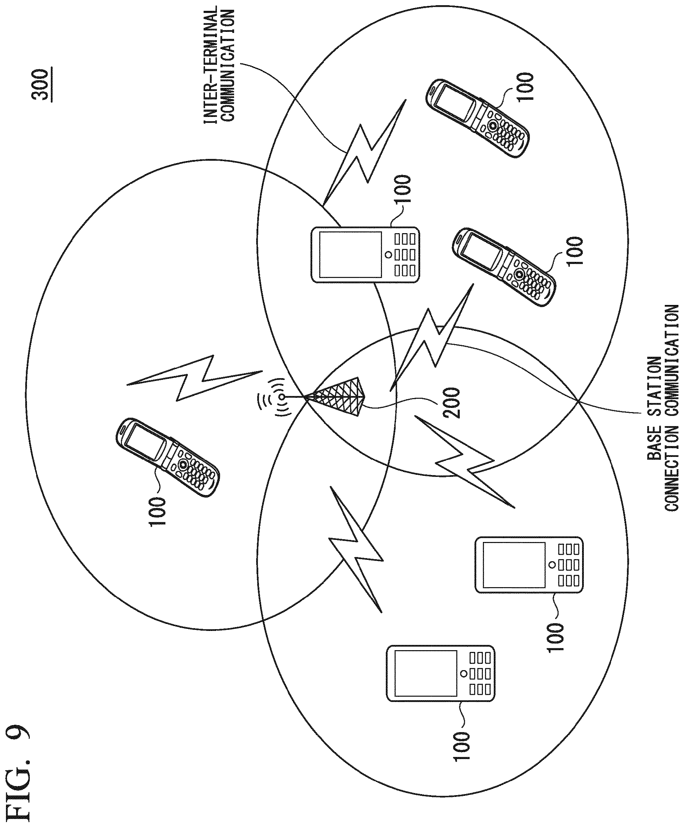

In recent years, inter-terminal communication in cellular systems has been studied in which radio terminals directly communicate using radio resources of a cellular system. FIG. 9 is a conceptual diagram of a cellular system 300. In FIG. 9, the cellular system 300 has radio terminals 100 and a base station 200. The radio terminals 100 each have a function that performs base station connection communication and a function that performs inter-terminal communication. In base station connection communication, the radio terminal 100 communicates with the base station 200 using radio resources of the cellular system 300. In inter-terminal communication, the radio terminal 100 communicates with another radio terminal 100 using radio resources of the cellular system 300.

### [Prior Art Documents]

### [Non-patent Document]

[Non-Patent Document 1] M. Belleschi, G. Fodor, A. Abardo, "Performance Analysis of a Distributed Resource Allocation Scheme for D2D Communications", IEEE Globecom 2011.

EP 2012443 A2 describes a method and apparatus for allocating frequency resources for peer to peer communication between terminals without a base station are provided. The method determines resources used for a direct communication between two terminals in a communication system. The method includes determining uplink frequency resources of a cellular communication system for use in the direct communication between the two terminals, determining a primary maximum transmission power to minimize interference caused by the direct communication on the cellular communication system and performing the direct communication between the two terminals by using the uplink frequency resources and a transmission power less than the determined primary maximum transmission power.

### SUMMARY OF THE INVENTION

### Problem to be Solved by the Invention

In the aforementioned cellular system, radio interference may occur as a result of using the same radio resources in base station connection communication and inter-terminal communication.

The present invention has been achieved in view of such circumstances. An object of the present invention is to provide a radio terminal, a base station apparatus, a radio communication system, and a computer program capable of mitigating the effects of radio interference that occur due to using the same radio resources in base station connection communication and inter-terminal communication.

### Means for Solving the Problem

The invention is disclosed in the appended claims.

### Effect of the Invention

According to the present invention, it is possible to mitigate the effects of radio interference that occur due to using the same radio resources in base station connection communication and in inter-terminal communication.

In order that the present arrangement be more readily understood, specific embodiments thereof will now be described.

### BRIEF DESCRIPTION OF THE DRAWINGS

FIG. 1 is a configuration example of a radio terminal according to a first embodiment of the present invention.
FIG. 2 is a flowchart of an inter-terminal communication control method.
FIG. 3 is a configuration example of a base station apparatus according to a second embodiment of the present invention.
FIG. 4 is a configuration example of a radio terminal according to the second embodiment of the present invention.
FIG. 5 is a flowchart of an inter-terminal communication control method.
FIG. 6 is a flowchart of an inter-terminal communication control method.
FIG. 7 is a flowchart of an inter-terminal communication control method.
FIG. 8 is a flowchart of an inter-terminal communication control method.
FIG. 9 is a conceptual diagram of a cellular system.

### EMBODIMENTS FOR CARRYING OUT THE INVENTION

Hereinbelow, embodiments of the present invention shall be described referring to the drawings.

### [First Embodiment]

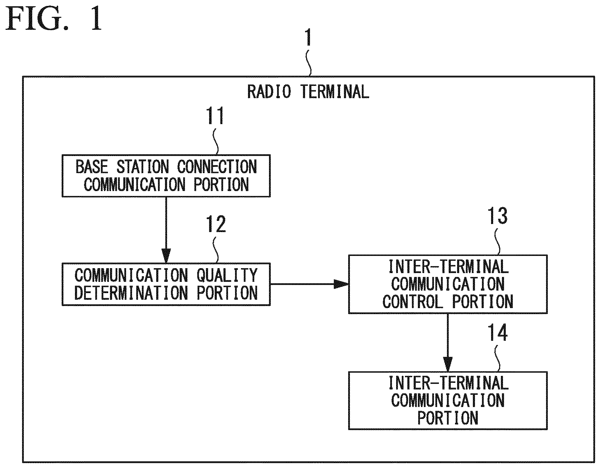

FIG. 1 is a configuration example of a radio terminal 1 according to a first embodiment of the present invention. In the present embodiment, the radio terminal 1 is a radio terminal of a cellular system. In FIG. 1, the radio terminal 1 has a base station connection communication portion 11, a communication quality determination portion 12, an inter-terminal communication control portion 13, and an inter-terminal communication portion 14.

The base station connection communication portion 11 performs base station connection communication with a base station of a cellular system.

The communication quality determination portion 12 determines the communication quality of base station connection communication. Examples "A-1, A-2, A-3" of this communication quality determination method are shown below.
(Example A-1) The communication quality determination portion 12 determines the communication quality using an average value over a predetermined time of SINR (Signal to Interference and Noise power Ratio) in the downlink direction (the direction from the base station to a radio terminal) (average SINR). For example, the communication quality determination portion 12 compares the average SINR with a predetermined threshold value, and determines whether or not the average SINR meets a threshold value.
(Example A-2) The communication quality determination portion 12 determines the communication quality using the number of base stations that the own radio terminal 1 can connect with (connectable base station number). For example, the communication quality determination portion 12 compares the connectable base station number with a predetermined threshold number, and determines whether or not the connectable base station number meets a threshold value.
(Example A-3) The communication quality determination portion 12 determines the communication quality using position information of the own radio terminal 1. For example, the communication quality determination portion 12 compares a reciprocal of the distance between the own radio terminal 1 and a base station with a predetermined threshold value, and determines whether or not the reciprocal of the distance meets a threshold value.

The inter-terminal communication control portion 13 controls inter-terminal communication. The inter-terminal communication control portion 13 decides the radio resources to be used in inter-terminal communication from the radio resources of the cellular system, based on the communication quality determination result by the communication quality determination portion 12.

The inter-terminal communication portion 14 performs inter-terminal communication with another radio terminal 1 using the radio resources that the inter-terminal communication control portion 13 has decided on.

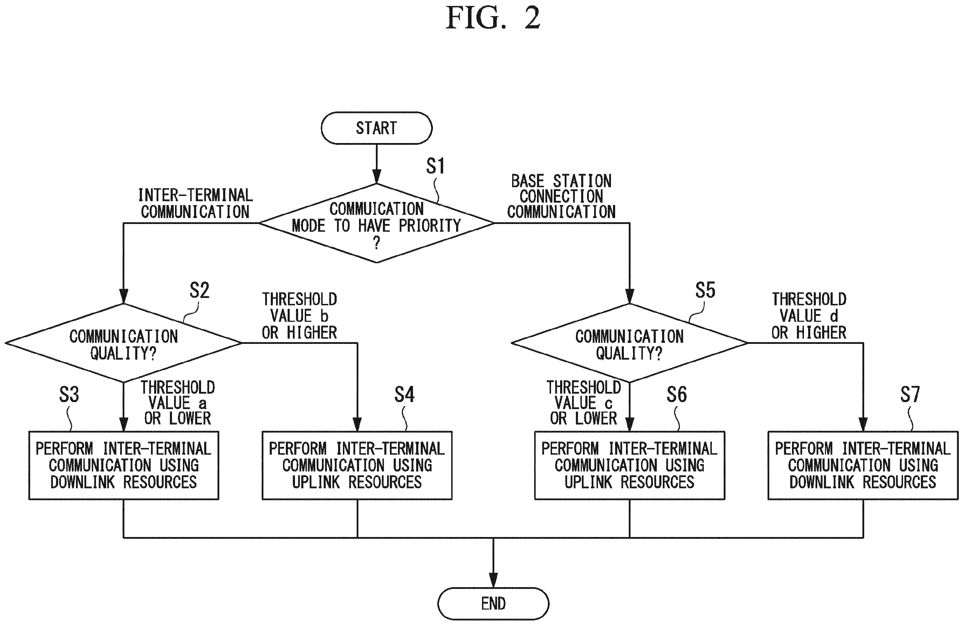

FIG. 2 is a flowchart of an inter-terminal communication control method. Hereinbelow, an operation of the radio terminal 1 according to the first embodiment shall be described referring to FIG. 2.
Step S1: The inter-terminal communication control portion 13 judges the communication mode to have priority among inter-terminal communication and base station connection communication. This judgment is made in accordance with a communication mode priority control parameter that has been set in advance. The communication mode priority control parameter indicates which communication mode is to have priority among inter-terminal communication and base station connection communication. The communication mode priority control parameter can be arbitrarily set by the date of manufacture or the date of sale of the radio terminal 1, or by communication from a base station (control channel or the like). In the case of giving priority to inter-terminal communication, the process proceeds to Step S2. In the case of giving priority to base station connection communication, the process proceeds to Step S5.
Step S2: The inter-terminal communication control portion 13 judges the communication quality determination result by the communication quality determination portion 12. As the result, in the case of the communication quality being a predetermined threshold value "a" or lower, the process proceeds to Step S3. In the case of the communication quality being a predetermined threshold value "b" or higher, the process proceeds to Step S4.
Step S3: The inter-terminal communication control portion 13 instructs the inter-terminal communication portion 14 to perform inter-terminal communication using downward link radio resources (downlink resources) of the cellular system. Thereby, the inter-terminal communication portion 14 performs inter-terminal communication using downlink resources.
Step S4: The inter-terminal communication control portion 13 instructs the inter-terminal communication portion 14 to perform inter-terminal communication using upward (the direction from a radio terminal to a base station) link radio resources (uplink resources) of the cellular system. Thereby, the inter-terminal communication portion 14 performs inter-terminal communication using uplink resources.
Step S5: The inter-terminal communication control portion 13 judges communication quality determination result by the communication quality determination portion 12. As the result, In the case of the communication quality being a predetermined threshold value "c" or lower, the process proceeds to Step S6. In the case of the communication quality being a predetermined threshold value "d" or higher, the process proceeds to Step S7.
Step S6: The inter-terminal communication control portion 13 instructs the inter-terminal communication portion 14 to perform inter-terminal communication using uplink resources. Thereby, the inter-terminal communication portion 14 performs inter-terminal communication using uplink resources.
Step S7: The inter-terminal communication control portion 13 instructs the inter-terminal communication portion 14 to perform inter-terminal communication using downlink resources. Thereby, the inter-terminal communication portion 14 performs inter-terminal communication using downlink resources.

Note that the threshold values "a", "b", "c", and "d" for determining the communication quality of the base station connection communication can be arbitrarily set by the date of manufacture or the date of sale of the radio terminal 1, or by communication from a base station (control channel or the like).

According to the first embodiment, in the case of giving priority to inter-terminal communication, the radio terminal 1 performs inter-terminal communication using downlink resources when the communication quality of base station connection communication is a predetermined communication quality or lower. Thereby, when for example the wireless terminal 1 performing inter-terminal communication is in the vicinity of a cell edge, it is possible to avoid radio interference due to upward link radio waves transmitted at a comparatively greater power by another radio terminal 1 that is in the vicinity of the cell edge and performing base station connection communication. On the other hand, in the case of giving priority to inter-terminal communication, the radio terminal 1 performs inter-terminal communication using uplink resources when the communication quality of base station connection communication is a predetermined communication quality or higher. Thereby, when for example the wireless terminal 1 performing inter-terminal communication is in the vicinity of a cell center, it is possible to avoid radio interference due to downward link radio waves from the base station with a comparatively greater power.

Also, in the case of giving priority to base station connection communication, the radio terminal 1 performs inter-terminal communication using uplink resources when the communication quality of base station connection communication is a predetermined communication quality or lower. Thereby, when for example the wireless terminal 1 performing inter-terminal communication is in the vicinity of a cell edge, it is possible to avoid radio interference imparted to downward link radio waves received at a comparatively smaller power by another radio terminal 1 that is in the vicinity of the cell edge and performing base station connection communication. On the other hand, in the case of giving priority to base station connection communication, the radio terminal 1 performs inter-terminal communication using downlink resources when the communication quality of the base station connection communication is a predetermined communication quality or higher. Thereby, when for example the wireless terminal 1 performing inter-terminal communication is in the vicinity of a cell center, it is possible to avoid radio interference imparted to upward link radio waves that a base station receives with a comparatively smaller power.

According to the first embodiment given above, it is possible to mitigate the effects of radio interference that occur due to using the same radio resources in base station connection communication and in inter-terminal communication.

### [Second Embodiment]

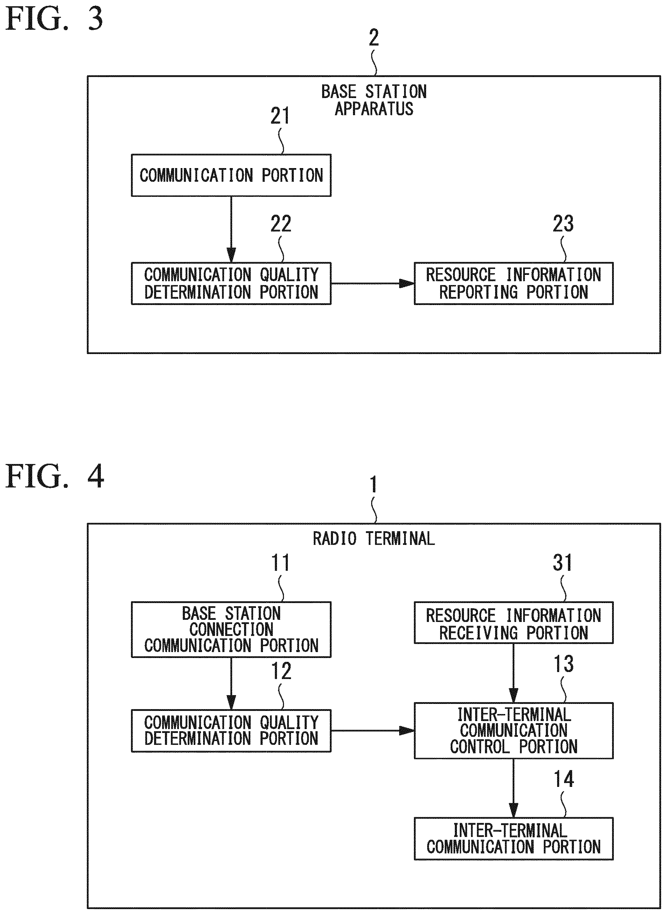

A second embodiment is a modification of the first embodiment. FIG. 3 is a configuration example of a base station apparatus 2 according to the second embodiment of the present invention. FIG. 4 is a configuration example of the radio terminal 1 according to the second embodiment of the present invention. In the present embodiment, the radio terminal 1 and the base station apparatus 2 are included in a cellular system. In FIG. 3, the base station apparatus 2 has a communication portion 21, a communication quality determination portion 22, and a resource information reporting portion 23. In FIG. 4, the radio terminal 1 has a resource information receiving portion 31 in addition to the constitution of FIG. 1.

In the base station apparatus 2 shown in FIG. 3, the communication portion 21 performs communication with the radio terminal 1. The communication quality determination portion 22 determines the communication quality between the own base station apparatus 2 and the radio terminal 1. The resource information reporting portion 23, based on the determination result of the communication quality by the communication quality determination portion 22, reports information on the radio resources to be used in inter-terminal communication (resource information for inter-terminal communication) to the radio terminal 1.

In the radio terminal 1 shown in FIG. 4, the resource information receiving portion 31 receives the resource information for inter-terminal communication reported from the base station apparatus 2. The resource information receiving portion 31 outputs the resource information for inter-terminal communication that has been received to the inter-terminal communication control portion 13.

The inter-terminal communication control portion 13, based on the communication quality determination result by the communication quality determination portion 12 and the resource information for inter-terminal communication, decides the radio resources to be used in inter-terminal communication from the radio resources of the cellular system.

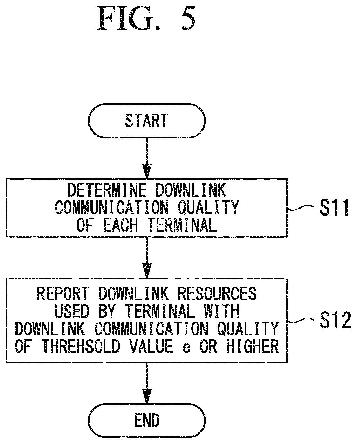

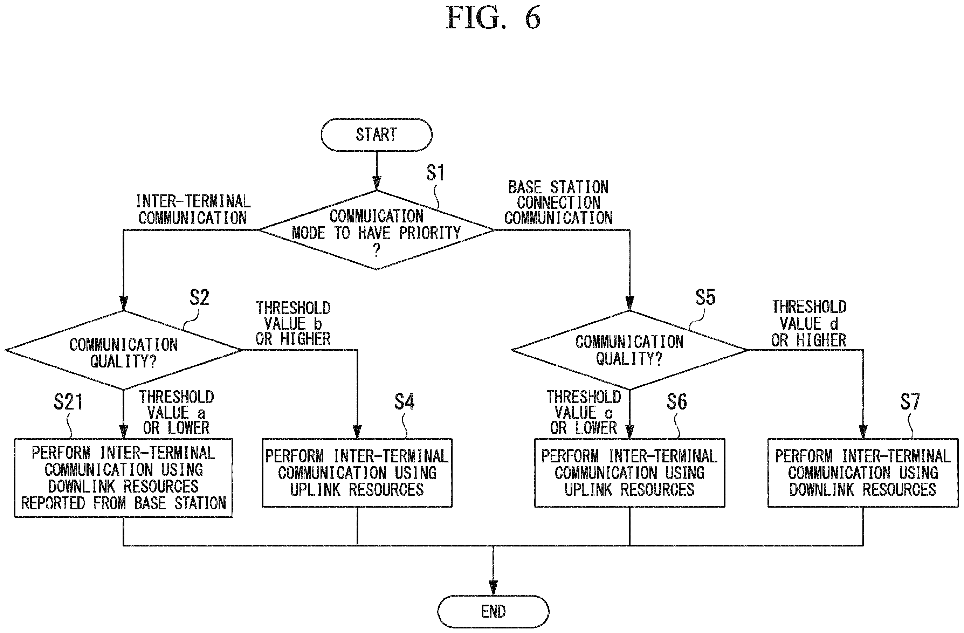

FIG. 5 and FIG. 6 are flowcharts of an inter-terminal communication control method. First, the operation of the base station apparatus 2 according to the second embodiment shall be described referring to FIG. 5.

Step S11: The communication quality determination portion 22 determines the downward link communication quality (downlink communication quality) for each radio terminal 1. Examples "B-1, B-2" of this downlink communication quality determination method shall be shown below.
(Example B-1) The communication quality determination portion 22 determines the communication quality using information that indicates the downlink communication quality (for example, SINR or CQI (Channel Quality Indicator)) that is sent from the radio terminal 1 to the own base station apparatus 2. For example, the communication quality determination portion 22 compares the SINR with a predetermined threshold value, and determines whether or not the SINR meets the threshold value.
(Example B-2) The communication quality determination portion 22 determines the communication quality using position information of the radio terminal 1 that is sent from the radio terminal 1 to the own base station apparatus 2. For example, the communication quality determination portion 22 compares a reciprocal of the distance between the radio terminal 1 and a base station with a predetermined threshold value, and determines whether or not the reciprocal of the distance meets the threshold value.

Step S12: The resource information reporting portion 23 reports to the radio terminal 1 resource information for inter-terminal communication indicating the downlink resources used by the ratio terminal 1 with a downlink communication quality of threshold value "e" or higher.

Next, an operation of the radio terminal 1 according to the second embodiment shall be described referring to FIG. 6. In FIG. 6, the steps corresponding to those in FIG. 2 of the first embodiment shall be denoted by the same reference symbols. The second embodiment differs from the first embodiment only by Step S3 of FIG. 2, with the other steps being the same as the first embodiment.

In Step S2 of FIG. 6, the inter-terminal communication control portion 13 determines the determination result of the communication quality by the communication quality determination portion 12, and as a result, in the case of the communication quality being a predetermined threshold value "a" or lower, the process proceeds to Step S21.

Step S21: The inter-terminal communication control portion 13 instructs the inter-terminal communication portion 14 so as to perform inter-terminal communication using downlink resources that the resource information for inter-terminal communication reported from the base station apparatus 2 indicates. Thereby, the inter-terminal communication portion 14 performs inter-terminal communication using the downlink resources used by another radio terminal 1 whose downlink communication quality is a predetermined communication quality or higher.

According to the second embodiment, in the case of giving priority to inter-terminal communication, the radio terminal 1 performs inter-terminal communication using downlink resources used by another radio terminal 1 in which the downlink communication quality is a predetermined communication quality or higher, when the communication quality of base station connection communication is a predetermined communication quality or lower. Thereby, when for example the radio terminal 1 that performs inter-terminal communication is in the vicinity of a cell edge, it is possible to avoid radio interference due to upward link radio waves transmitted at a comparatively greater power by another radio terminal 1 that is in the vicinity of the cell edge and performs base station connection communication. Moreover, it is possible to avoid radio interference being imparted to another radio terminal 1 which is in the vicinity of a cell edge, which performs base station connection communication and whose downlink communication quality is less than a predetermined communication quality.

According to the second embodiment given above, it is possible to mitigate the effects of radio interference that occur due to using the same radio resources in base station connection communication and in inter-terminal communication.

### [Third Example]

A third example is a modification of the first embodiment. A configuration example of a base station apparatus 2 according to the third embodiment is the same as in FIG. 3. A configuration example of a radio terminal 1 according to the third embodiment is the same as in FIG. 4.

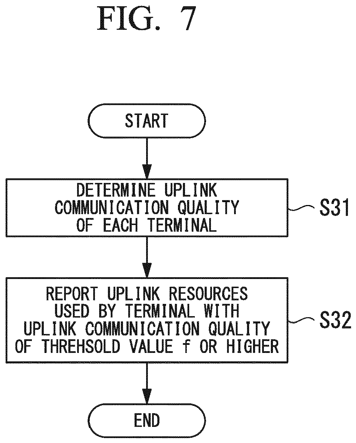

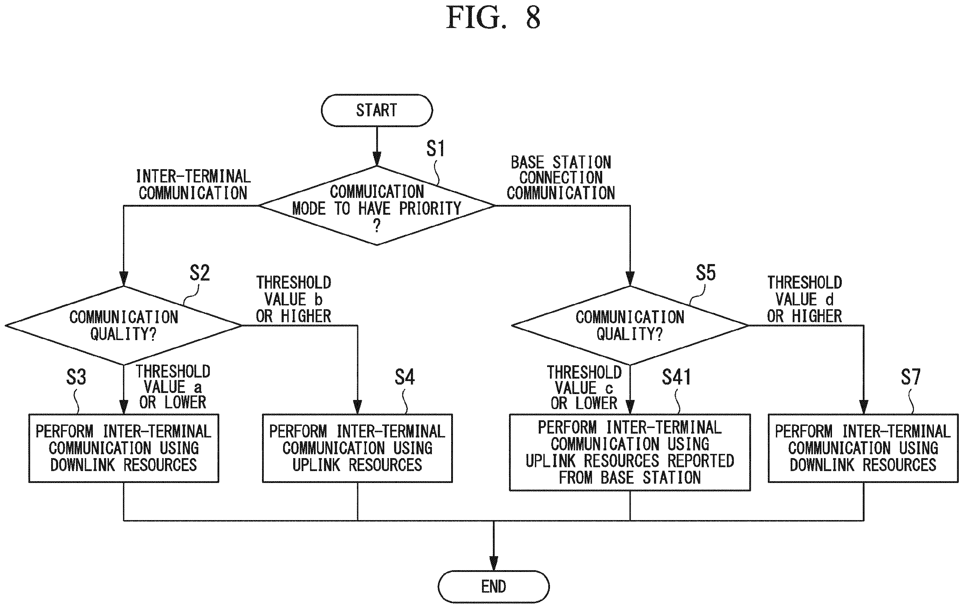

FIG. 7 and FIG. 8 are flowcharts of an inter-terminal communication control method. First, an operation of the base station apparatus 2 according to the third embodiment shall be described referring to FIG. 7.

Step S31: The communication quality determination portion 22 determines the upward link communication quality (uplink communication quality) for each radio terminal 1. Examples "C-1, C-2" of this uplink communication determination method are shown below.
(Example C-1) The communication quality determination portion 22 determines the communication quality using the upward SINR. For example, the communication quality determination portion 22 compares the SINR with a predetermined threshold value and determines whether or not the SINR meets threshold value.
(Example C-2) The communication quality determination portion 22 determines the communication quality using the position information of the radio terminal 1 that is sent from the radio terminal 1 to the own base station apparatus 2. For example, the communication quality determination portion 22 compares a reciprocal of the distance between the radio terminal 1 and a base station with a predetermined threshold value, and determines whether or not the reciprocal of the distance meets the threshold value.

Step S32: The resource information reporting portion 23 reports to the radio terminal 1 resource information for inter-terminal communication that indicates the uplink resources used by the radio terminal 1 with an uplink communication quality of threshold value "f' or above.

Next, referring to FIG. 8, an operation of the radio terminal 1 according to the third example shall be described. In FIG. 8, the steps corresponding to FIG. 2 of the first embodiment shall be denoted by the same reference symbols. The third example differs from the first embodiment only by Step S6 of FIG. 2, with the other steps being the same as the first embodiment.

In Step S5 of FIG. 8, the inter-terminal communication control portion 13 judges the determination result of the communication quality by the communication quality determination portion 12. As the result, in the case of the communication quality being a predetermined threshold value "c" or lower, the process proceeds to Step S41.

Step S41: The inter-terminal communication control portion 13 instructs the inter-terminal communication portion 14 to perform inter-terminal communication using uplink resources indicated by the resource information for inter-terminal communication reported from the base station apparatus 2. Thereby, the inter-terminal communication portion 14 performs inter-terminal communication using the uplink resources used by another radio terminal 1 in which the uplink communication quality is a predetermined communication quality or higher.

According to the third example, in the case of giving priority to base station connection communication, the radio terminal 1 performs inter-terminal communication using uplink resources used by another radio terminal 1 in which the uplink communication quality is a predetermined communication quality or higher, when the communication quality of base station connection communication is a predetermined communication quality or lower. Thereby, when for example the radio terminal 1 performing inter-terminal communication is in the vicinity of a cell edge, it is possible to avoid radio interference being imparted to downward link radio waves that another radio terminal 1 that is in the vicinity of the cell edge and performs base station connection communication receives with a comparatively smaller power. Moreover, it is possible to avoid radio interference being imparted to another radio terminal 1 which is in the vicinity of the cell edge, which performs base station connection communication, and whose uplink communication quality is less than a predetermined communication quality.

According to the third example given above, it is possible to mitigate the effects of radio interference that occur due to using the same radio resources in base station connection communication and in inter-terminal communication.

The second embodiment and third example as set forth above may be combined.

Embodiments of the present invention have been described in detail as above with reference to the accompanying drawings, but specific constitutions are not limited to these embodiments, and design modifications not departing from the scope of the present invention are also included.

For example, in the aforementioned embodiments, a cellular system is given as an example of a radio communication system, but the radio communication system of the present invention is not limited to a cellular system. A radio communication system according to the present invention may be one having at least one base station and a plurality of radio terminals, and that performs base station connection communication and inter-terminal communication using the same radio resources.

Also, time domain resources or frequency domain resources can be utilized as the radio resources. They may also be radio resources that are a combination of time domain resources and frequency domain resources.

Also, a program for realizing each of the steps shown in each of the foregoing embodiments may be recorded on a computer-readable recording medium, and by reading the program that is recorded on this recording medium into a computer system and running it, an inter-terminal communication control process may be performed. A "computer system" here may include an OS and hardware such as peripheral devices.

Furthermore, the "computer-readable recording medium" refers to a portable medium such as a flexible disk, a magneto-optical disk, ROM, writable nonvolatile memory such as flash memory, and a DVD (Digital Versatile Disk), and a storage device such as a hard disk that is housed in a computer system.

Moreover, the "computer-readable storage medium" includes one that maintains a program for a specified time, such as volatile memory (for example, Dynamic Random Access Memory (DRAM)) in a computer system that serves as a server or client in the case of a program that is transmitted via a network such as the Internet or a communication line such as telephone lines.

The aforementioned program may be transmitted from a computer system that stores this program in a storage device or the like via a transmission medium or transmission waves in the transmission medium to another computer system. A "transmission medium" that transmits the program refers to a medium that has a function to send information, such as a network like the Internet, or a communication line such as telephone lines.

The aforementioned program may be one for realizing a portion of the aforedescribed functions.

The aforementioned program may be a so-called differential file (differential program) that can realize the aforedescribed functions by combination with a program that is already recorded in a computer system.

### INDUSTRIAL APPLICABILITY

The present invention can be applied to a radio terminal, a base station apparatus, a radio communication system, and a computer program. By applying the present invention, it is possible to mitigate the effects of radio interference that occur due to using the same radio resources in base station connection communication and inter-terminal communication.

### Reference Symbols

1: Radio terminal
2: Base station apparatus
11: Base station connection communication portion
12: Communication quality determination portion
13: Inter-terminal communication control portion
14: Inter-terminal communication portion
21: Communication portion
22: Communication quality determination portion
23: Resource information reporting portion
31: Resource information receiving portion

## Claims

1. A radio terminal (1) comprising:
a base station connection communication portion (11) means adapted to perform base station connection communication with a base station;
a communication quality determination portion (12) means adapted to determine a communication quality of the base station connection communication to acquire a determination result of the communication quality;
an inter-terminal communication control portion (13) means adapted to decide a radio resource to be used for inter-terminal communication from radio resources that the base station uses, based on the determination result of the communication quality; and
an inter-terminal communication portion (14) means adapted to perform inter-terminal communication with another radio terminal, using the radio resource decided by the inter-terminal communication control portion, the radio terminal further **characterized by**: the inter-terminal communication control portion means is adapted to decide to use a downlink resource for the inter-terminal communication when the inter-terminal communication control portion means determines that the communication quality of the base station connection communication is a predetermined communication quality or lower, in a case of giving priority to inter-terminal communication.

2. The radio terminal according to claim 1, wherein the inter-terminal communication control portion means is adapted to decide to use an uplink resource for the inter-terminal communication when the inter-terminal communication control portion means is adapted to determine that the communication quality of the base station connection communication is a predetermined communication quality or higher, in a case of giving priority to inter-terminal communication.

3. The radio terminal according to claim 1 or 2, wherein the inter-terminal communication control portion means is adapted to decide to use an uplink resource for the inter-terminal communication when the inter-terminal communication control portion means is adapted to determine that the communication quality of the base station connection communication is a predetermined communication quality or lower, in a case of a communication mode priority control parameter is set to base station connection communication.

4. The radio terminal according to any one of claims 1 to 3, wherein the inter-terminal communication control portion means is adapted to decide to use a downlink resource for the inter-terminal communication when the inter-terminal communication control portion means is adapted to determine that the communication quality of the base station connection communication is a predetermined communication quality or higher, in a case of a communication mode priority control parameter is set to base station connection communication.

5. The radio terminal according to any one of claims 1 to 4, further comprising:
a resource information receiving portion (31) means is adapted to receive resource information for inter-terminal communication based on a determination result of a communication quality between the base station and another radio terminal,
wherein the inter-terminal communication control portion means is adapted to decide a radio resource to be used in inter-terminal communication from the radio resources that the base station uses, based on the determination result of the communication quality by the communication quality determination portion means and the resource information for inter-terminal communication.

6. The radio terminal according to claim 5,
wherein the resource information receiving portion means is adapted to receive resource information for inter-terminal communication indicating a downlink resource used by another radio terminal whose downlink communication quality is a predetermined communication quality or higher, and
the inter-terminal communication control portion means is adapted to decide to use for the inter-terminal communication the downlink resource indicated by the resource information for inter-terminal communication when the inter-terminal communication control portion means is adapted to determine that the communication quality of the base station connection communication is a predetermined communication quality or lower, in a case of giving priority to inter-terminal communication.

7. The radio terminal according to claim 5 or 6,
wherein the resource information receiving portion means is adapted to receive resource information for inter-terminal communication indicating an uplink resource used by another radio terminal whose uplink communication quality is a predetermined communication quality or higher, and
the inter-terminal communication control portion means is adapted to decide to use for the inter-terminal communication the uplink resource indicated by the resource information for inter-terminal communication when the inter-terminal communication control portion means is adapted to determine that the communication quality of base station connection communication is a predetermined communication quality or lower, in a case of a communication mode priority control parameter is set to base station connection communication.

8. The radio terminal according to claim 1,
wherein the inter-terminal communication control portion means is adapted to determine whether to give priority to either one of inter-terminal communication and base-station connection communication, and
the inter-terminal communication control portion means is adapted to compare the communication quality of the base station connection communication with a predetermined communication quality to decide a radio resource.

9. A radio communication system comprising at least one base station (2) and a plurality of radio terminals (1), wherein
the base station includes:
a communication portion (21) means adapted to communicate with each of the plurality of radio terminals;
a communication quality determination portion (22) means adapted to determine communication qualities between the communication portion and each of the plurality of radio terminals to acquire determination results of the communication qualities; and
a resource information reporting portion (23) means adapted to report resource information for inter-terminal communication to each of the plurality of radio terminals based on the determination results of the communication qualities, and
each of the plurality of radio terminals includes:
a base station connection communication portion (11) means adapted to perform base station connection communication with the base station;
a communication quality determination portion (12) means adapted to determine a communication quality of the base station connection communication to acquire a determination result of the communication quality;
a resource information receiving portion (31) means adapted to receive the resource information for inter-terminal communication;
an inter-terminal communication control portion (13) means adapted to decide a radio resource to be used for inter-terminal communication from radio resources that the base station uses, based on the determination result of the communication quality of the base station connection communication and the resource information for inter-terminal communication; and
an inter-terminal communication portion (14) means adapted to perform inter-terminal communication with another radio terminal, using the radio resource decided by the inter-terminal communication control portion,
wherein the radio terminals are further **characterized by**: the inter-terminal communication control portion means is adapted to decide to use a downlink resource for the inter-terminal communication when the inter-terminal communication control portion means is adapted to determine that the communication quality of the base station connection communication is a predetermined communication quality or lower, in a case of giving priority to inter-terminal communication.

10. A computer program which causes a computer to execute:
performing base station connection communication with a base station;
determining a communication quality of the base station connection communication to acquire a determination result of the communication quality;
deciding a radio resource to be used for inter-terminal communication from radio resources that the base station uses, based on the determination result of the communication quality; and
performing inter-terminal communication with another radio terminal, using the decided radio resource, the computer program further **characterized in that**: deciding the radio source includes deciding to use a downlink resource for the inter-terminal communication when it is determined that the communication quality of the base station connection communication is a predetermined communication quality or lower, in a case of giving priority to inter-terminal communication.

## Patentansprüche

1. Funkendgerät (1), umfassend:
ein Basisstationsverbindungskommunikationsabschnittsmittel (11), das angepasst ist, um Basisstationsverbindungskommunikation mit einer Basisstation durchzuführen;
ein Kommunikationsqualitätsbestimmungsabschnittsmittel (12), das angepasst ist, um eine Kommunikationsqualität der Basisstationsverbindungskommunikation zu bestimmen, um ein Bestimmungsergebnis der Kommunikationsqualität zu erlangen;
ein Zwischenendgerätkommunikationssteuerabschnittsmittel (13), das angepasst ist, um aus Funkressourcen, welche die Basisstation verwendet, über eine Funkressource zu entscheiden, die zur Zwischenendgerätkommunikation verwendet werden soll, auf der Basis des Bestimmungsergebnisses der Kommunikationsqualität; und
ein Zwischenendgerätkommunikationsabschnittsmittel (14), das angepasst ist, um unter Verwendung der Funkressource, über die der
Zwischenendgerätkommunikationssteuerabschnitt entschieden hat, Zwischenendgerätkommunikation mit einem anderen Funkendgerät durchzuführen, wobei das Funkendgerät ferner **dadurch gekennzeichnet ist, dass**:
das Zwischenendgerätkommunikationssteuerabschnittsmittel angepasst ist, um zu entscheiden, eine Downlink-Ressource für die Zwischenendgerätkommunikation zu verwenden, wenn das Zwischenendgerätkommunikationssteuerabschnittsmittel bestimmt, dass die Kommunikationsqualität der
Basisstationsverbindungskommunikation eine vorgegebene Kommunikationsqualität aufweist oder geringer ist, wenn Zwischenendgerätkommunikation Priorität gegeben wird.

2. Funkendgerät nach Anspruch 1, wobei das Zwischenendgerätkommunikationssteuerabschnittsmittel angepasst ist, um zu entscheiden, eine Uplink-Ressource für die Zwischenendgerätkommunikation zu verwenden, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder höher ist, wenn Zwischenendgerätkommunikation Priorität gegeben wird.

3. Funkendgerät nach Anspruch 1 oder 2, wobei das Zwischenendgerätkommunikationssteuerabschnittsmittel angepasst ist, um zu entscheiden, eine Uplink-Ressource für die Zwischenendgerätkommunikation zu verwenden, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder geringer ist, wenn ein Kommunikationsmodusprioritätssteuerparameter auf Basisstationsverbindungskommunikation eingestellt ist.

4. Funkendgerät nach einem der Ansprüche 1 bis 3, wobei das Zwischenendgerätkommunikationssteuerabschnittsmittel angepasst ist, um zu entscheiden, eine Downlink-Ressource für die Zwischenendgerätkommunikation zu verwenden, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder höher ist, wenn ein Kommunikationsmodusprioritätssteuerparameter auf Basisstationsverbindungskommunikation eingestellt ist.

5. Funkendgerät nach einem der Ansprüche 1 bis 4, ferner umfassend:
ein Ressourceninformationsempfangsabschnittsmittel (31), das angepasst ist, um Ressourceninformationen zur Zwischenendgerätkommunikation auf der Basis eines Bestimmungsergebnisses einer Kommunikationsqualität zwischen der Basisstation und einem anderen Funkendgerät zu empfangen,
wobei das Zwischenendgerätkommunikationssteuerabschnittsmittel angepasst ist, um aus den Funkressourcen, welche die Basisstation verwendet, über eine Funkressource zu entscheiden, die bei der Zwischenendgerätkommunikation verwendet werden soll, auf der Basis des Bestimmungsergebnisses der Kommunikationsqualität von dem Kommunikationsqualitätsbestimmungsabschnittsmittel und der Ressourceninformationen zur Zwischenendgerätkommunikation.

6. Funkendgerät nach Anspruch 5,
wobei das Ressourceninformationsempfangsabschnittsmittel angepasst ist, um Ressourceninformationen zur Zwischenendgerätkommunikation zu empfangen, die eine Downlink-Ressource angeben, die von einem anderen Funkendgerät verwendet wird, dessen Downlink-Kommunikationsqualität eine vorgegebene Kommunikationsqualität aufweist oder höher ist, und
das Zwischenendgerätkommunikationssteuerabschnittsmittel angepasst ist, um zu entscheiden, für die Zwischenendgerätkommunikation die Downlink-Ressource zu verwenden, die von den Ressourceninformationen zur Zwischenendgerätkommunikation angegeben wird, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder geringer ist, wenn Zwischenendgerätkommunikation Priorität gegeben wird.

7. Funkendgerät nach Anspruch 5 oder 6,
wobei das Ressourceninformationsempfangsabschnittsmittel angepasst ist, um Ressourceninformationen zur Zwischenendgerätkommunikation zu empfangen, die eine Uplink-Ressource angeben, die von einem anderen Funkendgerät verwendet wird, dessen Uplink-Kommunikationsqualität eine vorgegebene Kommunikationsqualität aufweist oder höher ist, und
das Zwischenendgerätkommunikationssteuerabschnittsmittel angepasst ist, um zu entscheiden, für die Zwischenendgerätkommunikation die Uplink-Ressource zu verwenden, die von den Ressourceninformationen zur Zwischenendgerätkommunikation angegeben wird, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder geringer ist, wenn ein Kommunikationsmodusprioritätssteuerparameter auf Basisstationsverbindungskommunikation eingestellt ist.

8. Funkendgerät nach Anspruch 1,
wobei das Zwischenendgerätkommunikationssteuerabschnittsmittel angepasst ist, um zu bestimmen, ob einem von Zwischenendgerätkommunikation und Basisstationsverbindungskommunikation Priorität gegeben werden soll, und
das Zwischenendgerätkommunikationssteuerabschnittsmittel angepasst ist, um die Kommunikationsqualität der Basisstationsverbindungskommunikation mit einer vorgegebenen Kommunikationsqualität zu vergleichen, um über eine Funkressource zu entscheiden.

9. Funkkommunikationssystem, umfassend mindestens eine Basisstation (2) und eine Vielzahl von Funkendgeräten (1), wobei
die Basisstation Folgendes beinhaltet:
ein Kommunikationsabschnittsmittel (21), das angepasst ist, um mit jedem der Vielzahl von Funkendgeräten zu kommunizieren;
ein Kommunikationsqualitätsbestimmungsabschnittsmittel (22), das angepasst ist, um Kommunikationsqualitäten zwischen dem Kommunikationsabschnitt und jedem der Vielzahl von Funkendgeräten zu bestimmen, um Bestimmungsergebnisse der Kommunikationsqualitäten zu erlangen; und
ein Ressourceninformationsmeldeabschnittsmittel (23), das angepasst ist, um Ressourceninformationen zur Zwischenendgerätkommunikation an jedes der Vielzahl von Funkendgeräten auf der Basis der Bestimmungsergebnisse der Kommunikationsqualitäten zu melden, und
jedes der Vielzahl von Funkendgeräten Folgendes beinhaltet:
ein Basisstationsverbindungskommunikationsabschnittsmittel (11), das angepasst ist, um Basisstationsverbindungskommunikation mit der Basisstation durchzuführen; ein Kommunikationsqualitätsbestimmungsabschnittsmittel (12), das angepasst ist, um eine Kommunikationsqualität der Basisstationsverbindungskommunikation zu bestimmen, um ein Bestimmungsergebnis der Kommunikationsqualität zu erlangen; ein Ressourceninformationsempfangsabschnittsmittel (31), das angepasst ist, um die Ressourceninformationen zur Zwischenendgerätkommunikation zu empfangen; ein Zwischenendgerätkommunikationssteuerabschnittsmittel (13), das angepasst ist, um aus Funkressourcen, welche die Basisstation verwendet, über eine Funkressource zu entscheiden, die zur Zwischenendgerätkommunikation verwendet werden soll, auf der Basis des Bestimmungsergebnisses der Kommunikationsqualität der Basisstationsverbindungskommunikation und der Ressourceninformationen zur Zwischenendgerätkommunikation; und
ein Zwischenendgerätkommunikationsabschnittsmittel (14), das angepasst ist, um unter Verwendung der Funkressource, über die der Zwischenendgerätkommunikationssteuerabschnitt entschieden hat, Zwischenendgerätkommunikation mit einem anderen Funkendgerät durchzuführen, wobei die Funkendgeräte ferner **dadurch gekennzeichnet sind, dass**:
das Zwischenendgerätkommunikationssteuerabschnittsmittel angepasst ist, um zu entscheiden, eine Downlink-Ressource für die Zwischenendgerätkommunikation zu verwenden, wenn das Zwischenendgerätkommunikationssteuerabschnittsmittel angepasst ist, um zu bestimmen, dass die Kommunikationsqualität der Basisstationsverbindungskommunikation eine vorgegebene Kommunikationsqualität aufweist oder geringer ist, wenn Zwischenendgerätkommunikation Priorität gegeben wird.

10. Computerprogramm, das bewirkt, dass ein Computer Folgendes ausführt:
Durchführen von Basisstationsverbindungskommunikation mit einer Basisstation;
Bestimmen einer Kommunikationsqualität der Basisstationsverbindungskommunikation, um ein Bestimmungsergebnis der Kommunikationsqualität zu erlangen;
aus Funkressourcen, welche die Basisstation verwendet, Entscheiden über eine Funkressource, die zur Zwischenendgerätkommunikation verwendet werden soll, auf der Basis des Bestimmungsergebnisses der Kommunikationsqualität; und
Durchführen von Zwischenendgerätkommunikation mit einem anderen Funkendgerät unter Verwendung der bestimmten Funkressource,
wobei das Computerprogramm ferner **dadurch gekennzeichnet ist, dass**:
das Entscheiden über die Funkressource das Entscheiden über die Verwendung einer Downlink-Ressource für die Zwischenendgerätkommunikation beinhaltet, wenn bestimmt wird, dass die Kommunikationsqualität der
Basisstationsverbindungskommunikation eine vorgegebene Kommunikationsqualität aufweist oder geringer ist, wenn Zwischenendgerätkommunikation Priorität gegeben wird.

## Revendications

1. Terminal radio (1), comprenant :
un moyen formant partie de communication de connexion de station de base (11), conçu pour réaliser une communication de connexion de station de base avec une station de base ;
un moyen formant partie de détermination de qualité de communication (12), conçu pour déterminer une qualité de communication de la communication de connexion de station de base afin d'acquérir un résultat de détermination de la qualité de communication ;
un moyen formant partie de contrôle de communication inter-terminal (13), conçu pour déterminer une ressource radio à utiliser pour une communication inter-terminal parmi des ressources radio utilisées par la station de base, sur la base du résultat de détermination de la qualité de communication ; et
un moyen formant partie de communication inter-terminal (14), conçu pour réaliser une communication inter-terminal avec un autre terminal radio, au moyen de la ressource radio déterminée par la partie de contrôle de communication inter-terminal,
le terminal radio étant en outre **caractérisé en ce que** :
le moyen formant partie de contrôle de communication inter-terminal est conçu pour décider d'utiliser une ressource en liaison descendante pour la communication inter-terminal quand le moyen formant partie de contrôle de communication inter-terminal détermine que la qualité de communication de la communication de connexion de station de base est inférieure ou égale à une qualité de communication prédéterminée, au cas où une priorité serait donnée à une communication inter-terminal.

2. Terminal radio selon la revendication 1, dans lequel le moyen formant partie de contrôle de communication inter-terminal est conçu pour décider d'utiliser une ressource en liaison montante pour la communication inter-terminal quand le moyen formant partie de contrôle de communication inter-terminal est conçu pour déterminer que la qualité de communication de la communication de connexion de station de base est supérieure ou égale à une qualité de communication prédéterminée, au cas où une priorité serait donnée à une communication inter-terminal.

3. Terminal radio selon la revendication 1 ou 2, dans lequel le moyen formant partie de contrôle de communication inter-terminal est conçu pour décider d'utiliser une ressource en liaison montante pour la communication inter-terminal quand le moyen formant partie de contrôle de communication inter-terminal est conçu pour déterminer que la qualité de communication de la communication de connexion de station de base est inférieure ou égale à une qualité de communication prédéterminée, au cas où un paramètre de contrôle de priorité de mode de communication serait réglé sur une communication de connexion de station de base.

4. Terminal radio selon l'une quelconque des revendications 1 à 3, dans lequel le moyen formant partie de contrôle de communication inter-terminal est conçu pour décider d'utiliser une ressource en liaison descendante pour la communication inter-terminal quand le moyen formant partie de contrôle de communication inter-terminal est conçu pour déterminer que la qualité de communication de la communication de connexion de station de base est supérieure ou égale à une qualité de communication prédéterminée, au cas où un paramètre de contrôle de priorité de mode de communication serait réglé sur une communication de connexion de station de base.

5. Terminal radio selon l'une quelconque des revendications 1 à 4, comprenant en outre :
un moyen formant partie de réception d'information de ressource (31), conçu pour recevoir une information de ressource pour une communication inter-terminal, sur la base d'un résultat de détermination d'une qualité de communication entre la station de base et un autre terminal radio,
le moyen formant partie de contrôle de communication inter-terminal étant conçu pour déterminer une ressource radio à utiliser dans une communication inter-terminal parmi les ressources radio utilisées par la station de base, sur la base du résultat de détermination de la qualité de communication par le moyen formant partie de détermination de qualité de communication et de l'information de ressource pour la communication inter-terminal.

6. Terminal radio selon la revendication 5,
dans lequel le moyen formant partie de réception d'information de ressource est conçu pour recevoir une information de ressource pour une communication inter-terminal indiquant une ressource en liaison descendante utilisée par un autre terminal radio dont la qualité de communication en liaison descendante est supérieure ou égale à une qualité de communication prédéterminée, et
le moyen formant partie de contrôle de communication inter-terminal est conçu pour décider d'utiliser pour la communication inter-terminal la ressource en liaison descendante indiquée par l'information de ressource pour la communication inter-terminal quand le moyen formant partie de contrôle de communication inter-terminal est conçu pour déterminer que la qualité de communication de la communication de connexion de station de base est inférieure ou égale à une qualité de communication prédéterminée, au cas où une priorité serait donnée à une communication inter-terminal.

7. Terminal radio selon la revendication 5 ou 6,
dans lequel le moyen formant partie de réception d'information de ressource est conçu pour recevoir une information de ressource pour une communication inter-terminal indiquant une ressource en liaison montante utilisée par un autre terminal radio dont la qualité de communication en liaison montante est supérieure ou égale à une qualité de communication prédéterminée, et
le moyen formant partie de contrôle de communication inter-terminal est conçu pour décider d'utiliser pour la communication inter-terminal la ressource en liaison montante indiquée par l'information de ressource pour la communication inter-terminal quand le moyen formant partie de contrôle de communication inter-terminal est conçu pour déterminer que la qualité de communication de la communication de connexion de station de base est inférieure ou égale à une qualité de communication prédéterminée, au cas où un paramètre de contrôle de priorité de mode de communication serait réglé sur une communication de connexion de station de base.

8. Terminal radio selon la revendication 1,
dans lequel le moyen formant partie de contrôle de communication inter-terminal est conçu pour déterminer s'il faut donner priorité à une communication inter-terminal ou à une communication de connexion de station de base, et
le moyen formant partie de contrôle de communication inter-terminal est conçu pour comparer la qualité de communication de la communication de connexion de station de base à une qualité de communication prédéterminée afin de déterminer une ressource radio.

9. Système de communication radio comprenant au moins une station de base (2) et une pluralité de terminaux radio (1),
la station de base comprenant :
un moyen formant partie de communication (21), conçu pour communiquer avec chaque terminal radio de la pluralité de terminaux radio ;
un moyen formant partie de détermination de qualité de communication (22), conçu pour déterminer des qualités de communication entre la partie de communication et chaque terminal radio de la pluralité de terminaux radio afin d'acquérir des résultats de détermination des qualités de communication ; et
un moyen formant partie de signalement d'information de ressource (23), conçu pour signaler une information de ressource pour une communication inter-terminal à chaque terminal radio de la pluralité de terminaux radio sur la base des résultats de détermination des qualités de communication, et
chaque terminal radio de la pluralité de terminaux radio comprenant :
un moyen formant partie de communication de connexion de station de base (11), conçu pour réaliser une communication de connexion de station de base avec la station de base ;
un moyen formant partie de détermination de qualité de communication (12), conçu pour déterminer une qualité de communication de la communication de connexion de station de base afin d'acquérir un résultat de détermination de la qualité de communication ;
un moyen formant partie de réception d'information de ressource (31), conçu pour recevoir l'information de ressource pour une communication inter-terminal ;
un moyen formant partie de contrôle de communication inter-terminal (13), conçu pour déterminer une ressource radio à utiliser pour une communication inter-terminal parmi des ressources radio utilisées par la station de base, sur la base du résultat de détermination de la qualité de communication de la communication de connexion de station de base et de l'information de ressource pour la communication inter-terminal ; et
un moyen formant partie de communication inter-terminal (14), conçu pour réaliser une communication inter-terminal avec un autre terminal radio, au moyen de la ressource radio déterminée par la partie de contrôle de communication inter-terminal,
les terminaux radio étant en outre **caractérisés en ce que** :
le moyen formant partie de contrôle de communication inter-terminal est conçu pour décider d'utiliser une ressource en liaison descendante pour la communication inter-terminal quand le moyen formant partie de contrôle de communication inter-terminal est conçu pour déterminer que la qualité de communication de la communication de connexion de station de base est inférieure ou égale à une qualité de communication prédéterminée, au cas où une priorité serait donnée à une communication inter-terminal.

10. Programme informatique qui amène un ordinateur à exécuter :
une étape consistant à réaliser une communication de connexion de station de base avec une station de base ;
une étape consistant à déterminer une qualité de communication de la communication de connexion de station de base afin d'acquérir un résultat de détermination de la qualité de communication ;
une étape consistant à déterminer une ressource radio à utiliser pour une communication inter-terminal parmi des ressources radio utilisées par la station de base, sur la base du résultat de détermination de la qualité de communication ; et
une étape consistant à réaliser une communication inter-terminal avec un autre terminal radio, au moyen de la ressource radio déterminée,
le programme informatique étant en outre **caractérisé en ce que** :
l'étape consistant à déterminer la ressource radio comprend l'étape consistant à décider d'utiliser une ressource en liaison descendante pour la communication inter-terminal quand il est déterminé que la qualité de communication de la communication de connexion de station de base est inférieure ou égale à une qualité de communication prédéterminée, au cas où une priorité serait donnée à une communication inter-terminal.
